(19) Europäisches Patentamt

European Patent Office

Office européen des brevets

(11) **EP 0 264 885 B2**

(12) **NEW EUROPEAN PATENT SPECIFICATION**

(45) Date of publication and mention
of the opposition decision:
**26.01.2000 Bulletin 2000/04**

(45) Mention of the grant of the patent:
**03.03.1993 Bulletin 1993/09**

(21) Application number: **87115279.9**

(22) Date of filing: **19.10.1987**

(51) Int. Cl.[7]: **C08G 64/02**, C08G 64/04,
C08G 64/40

(54) **Washing method for a solution dissolving a polycarbonate resin in an organic solvent**

Verfahren zum Waschen einer Lösung eines Polycarbonatharzes in einem organischen Lösungsmittel

Procédé de lavage d'une solution d'une résine de polycarbonate dans un solvant organique

(84) Designated Contracting States:
**BE CH DE FR GB IT LI NL SE**

(30) Priority: **22.10.1986 JP 25127786**

(43) Date of publication of application:
**27.04.1988 Bulletin 1988/17**

(73) Proprietor:
**IDEMITSU PETROCHEMICAL CO. LTD.
Tokyo 100 (JP)**

(72) Inventors:
• **Ashida, Takashi
IDEMITSU PETROCHEMICAL CO., LTD.
Ichihara-shi Chiba-ken (JP)**
• **Koyama, Mikio
IDEMITSU PETROCHEMICAL CO., LTD.
Ichihara-shi Chiba-ken (JP)**

(74) Representative:
**TER MEER STEINMEISTER & PARTNER GbR
Mauerkircherstrasse 45
81679 München (DE)**

(56) References cited:
**EP-A- 0 061 060**       **CA-A- 747 994**
**DE-C- 2 915 906**      **JP-A- 5 038 955**
**JP-A- 51 112 897**    **US-A- 3 470 133**
**US-A- 4 323 519**

• **Kirk-Othmer, Enc. Chem. Techn. Vol. 9, 1980, J.
Wiley & Sons, p. 691, 693, p. 705,**
• **English translation of JP-A-51-112 897**
• **English translation of JP-A-50-38 955**

Remarks:
The file contains technical information submitted
after the application was filed and not included in
this specification

**Description**

BACK GROUND OF THE INVENTION

This invention relates to a washing method for a solution dissolving a polycarbonate resin in an organic solvent, more particularly to a washing method for salts as impurities and the polycarbonate resin in an organic solvent, which solution is produced in a polycarbonate resin-producing process, through easy procedures, with an aqueous washing liquid to produce the polycarbonate resin-dissolving organic solution almost free of the abovementioned impurities with a high efficiency of production.

Generally, in producing a polycarbonate resin, it is known that various inorganic salts such as alkali halides, caustic alkali or alkali carbonates are produced by side reactions or other manners and retained as residual impurities in the solution dissolving the polycarbonate resin in an organic solvent. These impurities cause problems such as coloration, the reduction of thermal stability and the steam-resistance of the polycarbonate resin.

The impurities contained in the polycarbonate resin-dissolving organic solution may be removed by a multi-stage extration or with water in an orifice column and stirring vessel, in the case that the concentration of the polycarbonate resin is low.

However, it is hard to remove the entire amount of the abovementioned impurities by washing with water alone from an organic solution containing a higher concentration of the polycarbonate resin, because the organic solution containing a higher concentration of the resin has a higher viscosity.

Therefore, such a higher concentration, organic solution has hitherto been many times or repeatedly washing with water through a two-stage stirring vessel and a subsequent gravity settler. (see Japanese Patent Publication No. 38967/84).

However, such a washing method as mentioned above necessitates a big size of apparatus and complicated washing procedures. Furthermore, this method has a low efficiency of washing. Therefore, it requires much time to remove the impurities to a desired extent. These defects are a bar against the improvement in an efficiency of production of the polycarbonate resin.

In US 4 323 519 a method for washing an organic solution of a crude polycarbonate is disclosed according to which in a first step a water-in-oil type emulsion is formed, followed by phase inversion of said emulsion.

SUMMARY OF THE INVENTION

The object of this invention is to provide a method for washing a solution dissolving a polycarbonate resin in an organic solvent, to remove impurities with simplified procedures, with a high efficiency and rapidly, to obtain a polycarbonate resin not accompanied with such problems as mentioned above, even when the solution has a high concentration of polycarbonate resin or a high viscosity.

In order to achieve this object, the inventors have made intensive research and, as a result, they have found that a highly purified solution dissolving a polycarbonate resin in an organic solvent can be obtained by mixing crude solution dissolving a polycarbonate resin in an organic solvent with an aqueous washing liquid at a specified mixing ratio thereof, stirring the mixture with a stirrer having a specified stirring power or greater power and subjecting the resultant dispersion to centrifugal separation, thereby removing impurities with a high efficiency from the solution.

In accordance with this invention, there is provided a method according to claim 1.

DETAILED DESCRIPTION OF PREFERRED EMBODIMENTS

The crude organic solution is comprised of impurities and the polycarbonate resin dissolved in an organic solvent. This crude solution is produced in a polycarbonate resin-producing process. The organic solution dissolving a polycarbonate resin obtained by a so-called "phosgene process" is used for practice of the method of this invention.

The crude organic solution contains impurities such as alkali halides, caustic alkali, alkali carbonates, unreacted dioxy compounds and tertiary amines.

The organic solution may be, for example, a mixture of an polycarbonate resin with an organic solvent of a chlorinated hydrocarbon, such as dichloromethane, 1,1-dichloroethane, 1,2-dichloroethane, 1,1,1,-trichloroethane, 1,1,2-trichloroethane, 1,1,1,2-tetrachloroethane, 1,1,2,2-tetrachloroethane, pentachloroethane, hexachloroethane, 1,1-dichloroethylene, 1,2-dichloroethylene, trichlorethylene, tetrachloroethylene, chloromethane, chloroethane, propyl chloride, isopropyl chloride, 1,2-dichloropopane, 1,2,3-trichloropropane, allyl chloride, butyl chloride, isobutyl chloride, 1-chloropentane, chlorobenzene, dichlorobenzene, 1,2,4-trichlorobenzene, chlorotoluene, 1-chloronaphthalene, benzyl chloride, benzal chloride and benzotrichloride, or a mixture of polycarbonate resin solvent of with said chlorinated hydocarbon and at least one organic solvent selected from the group consisting of cyclic ethers such as dioxane and tetrahydrofuran, ketones such as acetophenone, cyclohexane and acetone, aromatic hydrocabons such as toluene, xylene, cyclohexane and n-heptane, alicyclic hydrocarbons and aliphatic hydrocarbons.

Among the abovementioned solvents, dichloromethane is particularly suitable for practice of the method of this invention. A solution dissolving 6 to 25 wt % of a polycarbonate resin in dichloromethane is more preferably applied to the method of this invention.

The molecular weight of the polycarbonate resin dissolved in the organic solution is not limited, but the method of this invention can be applied with a high efficiency of washing to a polycarbonate resin having a molecular weight of not less than 10,000, preferably 13,000 to 50,000.

The abovementioned aqueous washing light may preferably be an alkaline aqueous solution containing caustic alkali such as caustic soda for removing unreacted dioxy compounds with a high efficiency of washing, and it may preferably be a dilute aqueous acidic solution of hydrochloric acid, phosphoric acid or the like for removing a catalyst or caustic alkali with a high efficiency of washing. The removal of finally residual an alkali chloride such as NaCl may preferably be carried out with water, more preferably with pure water obtained through an ion exchange resin.

In accordance with this invention, a mixed solution of the crude solution containing a polycarbonate resin in an organic solvent with an aqueous washing liquid is preferred in such a manner that the aqueous phase of the mixed solution is in the range of 5 to 30 vol %, and the mixed solution is stirred at a stirring power per unit flow rate of 0.1 kw/m$^3$/hr or more, thereby forming a water-in-oil type emulsion.

In the case that the mixing ratio of the solution is lower than 5 vol %, the efficiency of washing may be decreased. On the other hand, if the mixing ratio is higher than 30 vol %, the type of the emulsion may be changed from the water-in-oil type one to the oil-in-water type one, so that the purified degree of the polycarbonate resin-dissolving organic solution is reduced.

One of the most important factors of this invention is a stirring power, which is 0.1 kw/m$^3$/hr or more.

A stirring apparatus used in this invention is preferably a compact one which requires a short risidence time therein and can be operated at a high speed. As such an apparatus is used a line mixer. This mixer may be T.K. PIPELINE-HOMOMIXER or HOMOMIC-LINE FLOW from TOKUSHU KIKA KOGYO CO., LTD, MULTILINE-MIXER from SATAKE CHEMICAL EQUIPMENT MFG. LTD. and KOMATSU SULZER DISINTEGRATOR from KOMATSU ZENOAH CO., or other commerically available apparatuses.

In accordance with this invention, the water-in-oil type emulsion formed above is subjected to centrifugal separation to separate the polycarbonate resin-dissolving organic solution from the aqueous washing liquid, thus extracting the purified polycarbonate resin-dissolving organic solution.

As an apparatus for the centrifugal separation may be used one capable of separating an almost dispersed water from the organic phase thereof.

In the centrifugal separation, centrifugal force is preferably more than 300 G.

This centrifugal separation apparatus may be, for example, K.C.C. centrifugal extractor from KAWASAKI HEAVY INDUSTRIES, LTD, or Hitachi V-ring centifugal extractor from HITACHI LTD..

If a gravity settler is substituted for the centrigual separator in this invention, then the former requires a long period of residence time and allows the water content of the purified polycarbonate resin-dissolving organic solution to be increased. This means that the washing is insufficiently and the organic solution has a bed quality, because the water contains the impurities. Therefore, the centrifugal separation is essential to this invention.

In accordance with this invention, the combination of a stirrer having a specified stirring power and a centrifugal separator is satisfactory to wash a solution dissolving a polycarbonate resin and impurities with a high efficiency of washing even when the solution has a high concentration of polycarbonate resin or a high viscosity. Therefore, the method of this invention can be carried out with ease.

The incorporation of the method of this invention into a polycarbonate resin-producing process can simplify the process and reduce the content of the impurities, so that the polycarbonate resin having an excellent thermal stability, steam-resistance and transparency can be obtained.

This invention will be explained below with reference to some examples.

EXAMPLE 1

A solution of 12.1 wt % of a polycarbonate resin having, a molecular weight of 29,400 in dichloromethane and further containing 1.5 ppm of sodium ions and 5.6 ppm of cchloride ions (having a viscosity of 140 cp at 27 C) and pure water were introduced at such a rate that the dichloromethane solution phase was in an amount of 80 vol % and the pure water phase was in an amount of 20 Vol %. That is, the former was introduced at a rate of 38 litres/hr and the latter at a rate of 9.5 litres/hr into a line mixer. The line mixer had an internal volume of 0.3 litres and it has a first turbine blade of 42.5 mm in diameter and a second turbine blade of 48 mm in diameter. The stirring power per unit flow rate was adjusted to 1.1 kw/m$^3$/hr. The density of the mixed solution was 1250 kg/m$^3$.

The water-in-oil type emulsion derived from the line mixer was then fed to a centrifugal extractor having an internal volume of 4 litres and a rotor having a diameter of 430 mm. The centrifugal extractor was one under a tradename of "K.C.C. Centrifugal Extractor" from KAWASAKI HEAVY INDUSTRIES LTD.. The centrifugal extraction was carried out at a revolution speed of 3000 rpm (The centrifugal force is about 1100 G). Thus, a purified solution of polycarbonate resin in dichloromethane was obtained at a rate of 38 litres/hr from the centrifugal extractor.

The residual concentrations of sodium ions and chloride ions in the purified solution of polycarbonate resin in dichloromethane were determined and also the percentages of extraction for these ions, respectively, determined.

The treatment conditions and results in this example are reported in TABLE 1.

EXAMPLES 2 to 4 and COMPARATIVE EXAMPLES 1 to 3

In these examples and comparative examples, the procedures of EXAMPLE 1 were repeated, except that the treatment conditions shown in TABLE 1 were used. The results are also reported in TABLE 1.

COMPARATIVE EXAMPLE 4

The procedures of EXAMPLE 1 were repeated, except that the water-in-oil emulsion derivated from the line mixer was not subjected to centriugal separation but to gravitational separation in a gravity settler.

COMPARATIVE EXAMPLE 5

In this example, an orifice mixer having a tube of 1.5 inch in inner diameter having six orifice plates of 1.4 mm in orifice diameter inserted at an interval of 25 cm therein was substituted for the line mixer used in EXAMPLE 1. The solution of polycarbonate resin in dichloromethane used in EXAMPLE 1 and pure water were allowed to flow in parallel in amounts of 38 litres/hr and 6.7 litres/hr, respectively, through the orifice mixer, so that the volume ratio of the solution and the pure water was 85 : 15, i.e., the aqueous phase occupied 15 % by volume of the total volume. In this case the differential pressure ($\Delta$P) wass 3 $kg/cm^2$. The emulsion derived from the orifice mixer was not subjected to centrifugal separation but to gravitational separation.

The treatment conditions and results of this example are reported in TABLE 1.

In EXAMPLES 1 to 4 and COMPARATIVE EXAMPLES 1 to 4, the stirring power per unit flow rate ($P_F$) was determined by the following equation:

$$P_F = \frac{N_p \cdot \rho \cdot n^3 \cdot d^5}{102 \cdot gc \cdot F} \ (kw/m^3/Hr)$$

$\rho$ :  density of emulsion ($kg/m^3$)
n :  vevolution speed
$N_p$ :  power number
d :  diameter of turbine (m)
$g_c$ :  conversion factor to gravity ($kg \cdot m/kg \cdot sec^2$)
F :  total flow rate ($m^3/Hr$)

The line mixer used in this invention has two-stage stirring blades. The power number of the first blade was 1.4 and that of the second blade was 0.8.

TABLE 1

| | Operating Conditions of Line Mixer | | | | Type of Emulsion | Conditions in Certrifugal Extraction | Sodium Ions | | Chloride Ions | |
|---|---|---|---|---|---|---|---|---|---|---|
| | Flow Rate | Aqueous Phase Ratio | Revolusion Speed | Stirring Power | | | Residual Amount (ppm) | % Extraction | Residual Amount | % Extraction |
| EX.1 | 47.5 Ω/Hr | 20 % | 3000 rpm | 1.1 kw/m³/Hr | W/O | 3000 rpm | 0.01 or less | 99 or more | 0.1 | 98 |
| EX.2 | 42.2 Ω/Hr | 10 % | 3000 rpm | 1.1 kw/m³/Hr | W/O | 3000 rpm | 0.04 | 97 | 0.15 | 97 |
| COMP.EX.1 | 39.1 Ω/Hr | 3 % | 3000 rpm | 1.1 kw/m³/Hr | W/O | 3000 rpm | 0.11 | 93 | 0.32 | 94 |
| COMP.EX.2 | 58.5 Ω/Hr | 35 % | 3000 rpm | 1.1 kw/m³/Hr | O/W | 3000 rpm | 0.21 | 86 | 0.71 | 87 |
| EX.3 | 44.7 Ω/Hr | 15 % | 3000 rpm | 1.1 kw/m³/Hr | W/O | 3000 rpm | 0.02 | 99 | 0.12 | 98 |
| EX.4 | 44.7 Ω/Hr | 15 % | 2000 rpm | 0.33kw/m³/Hr | W/O | 3000 rpm | 0.06 | 96 | 0.24 | 96 |
| COMP.EX.3 | 44.7 Ω/Hr | 15 % | 1000 rpm | 0.04kw/m³/Hr | W/O | 3000 rpm | 0.15 | 90 | 0.56 | 90 |
| COMP.EX.4 | 47.5 Ω/Hr | 20 % | 3000 rpm | 1.1 kw/m³/Hr | W/O | Gravitational Separation | 0.10 | 93 | 0.44 | 92 |
| COMP.EX.5 | 44.7 Ω/Hr | 15 % | Orifice Mixer | Differential Pressur $\Delta P=3kg-cm^2$ | W/O | Gravitatnal Separation | 0.32 | 78 | 0.86 | 84 |

※ Residual amounts are ones in a dichloromethane solution

EP 0 264 885 B2

EXAMPLE 5

A solution of 12.9 wt % of a polycarbonate resin having a molecular weight of 21,000 in dichloromethane and also containing 5.0 ppm of sodium ions and 31 ppm of triethylamine (having a viscosity of 75 cp at 23 C) and an aqueous 0.1-N hydrochloric acid solution were introduced at rates of 38 litres/hr and 9.5 litres/hr, respectively, so that the former was in an amount of 80 vol % and the latter in an amount of 20 vol %, into a line mixer having an internal volume of 1.2 litre and turbine blades of 48 mm in diameter. The stirring was carried out at an adjusted stirring power per unit flow rate of 0.67 kw/m$^2$/hr.

Then, the centrifugal separation was carried out in the same manner as in EXAMPLE 1, and the percentage and extraction was measured.

The power number of the line mixer used in EXAMPLE 5 was determined by the abovementioned equation to be 0.8.

The results are reported in TABLE 2.

CMPARATIVE EXAMPLE 6

An orifice mixer provided with an orifice column having six plates with orifice of 2.6 mm in diameter inserted therein was used in this example. The same solution as used in EXAMPLE 5 and an aqueous 0.1-N hydrochloric acid solution were allowed to flow in parallel in amounts of 38 litres/hr and 6.7 litres/hr, respectively, through the orifice mixer, so that the aqueous phase was in an amount of 40 vol % of the total amount. In this case, differential pressure was 1.2 kg/cm$^2$. The emulsion derived from the orifice mixer was subjected to gravitational separation, and the percentage of extraction was determined.

The results are reported in TABLE 2.

EXAMPLE 6

A solution of 12.4 wt % of a polycarbonate resin having a molecular weight of 22,900 and also containing 32 ppm of residual bisphenol A (having a viscosity of 74 cp at 23 C) was obtained by centrifugal separation of an emulsion made by condensation reaction in a polycarbonate resin-producing plant. This solution and an aqueous caustic soda solution having a $_p$H of 12.5 were introduced at rates of 38 litres/hr and 9.5 litres/hr, respectively, into the same line mixer as used in EXAMPLE 1, so that the dichloromethane solution occupied 80 vol % and the aqueous phase 20 vol %. The stirring was carried out at a stirring power per unit flow rate of 0.33 kw/m$^3$/hr. Subsequently, the centrifugal separation was effected in the same manner as in EXAMPLE 1, and the percentage of extraction was determined.

The results are reported in TABLE 2.

COMPARATIVE EXAMPLE 7

The same solution of polycarbonate resin in dichloromethane and the same aqueous caustic soda solution having a p$^H$ of 12.5 as used in EXAMPLE 6 were introduced in parallel at rates of 38 litres/hr and 12.7 litres/hr, respectively, so that the aqueous phase occupied 25 vol % of the total amount of both the solutions, into an orifice mixer having six orifice plates with an orifice of 2.0 mm in diameter inserted in an orifice column of the same size as that of the tube as used in COMPARATIVE EXAMPLE 5. The differential pressrure was 2.7 kg/cm$^2$. The dispersion derived from the orifice mixer was subjected to centrifugal separation with the centrifugal extractor. The percentage of extraction was determined. The results are reported in TABLE 2.

TABLE 2

| | Operating Conditions of Line Mixer | | | | Type of Emulsion | Conditions in Centrifugal Extraction | Sodium Ions | | Chloride Ions | | Triethylamine or Bisphenol A | |
|---|---|---|---|---|---|---|---|---|---|---|---|---|
| | Flow Rate | Aqueous Phase Ratio | Revolution Speed | Stirring Power | | | Residual Amount | % Extraction | Residual Amount | % Extraction | Residual Amount | % Extraction |
| EX.5 | 47.5 ℓ/Hr | 20% | 3000 rpm | 0.67kw/m³/Hr | W/O | 3000 rpm | 0.07 | 99 | — | — | 0.1 (triethylamine) | 99 or more |
| COMP.EX.6 | 63.3 ℓ/Hr | 40% | Orifice Mixer | Pressure Loss △P=1.2kg/cm² | O/W | Gravitational Separation | 2.4 | 52 | — | — | 2.1 (triethylamine) | 93 |
| EX.6 | 47.5 ℓ/Hr | 20% | 2000 | 0.33kw/m³/Hr | W/C | 3000 rpm | — | — | — | — | 1 or less (bisphenol A) | 96 or more |
| COMP.EX.7 | 50.7 ℓ/Hr | 25% | Orifice Mixer | Differential Pressur △P= 2.7kg/cm² | W/O | 3000 rpm | — | — | — | — | 3.6 (bisphenol A) | 82 |

※ Residual amounts are one in a dichloromethane solution

EP 0 264 885 B2

**Claims**

1. A method for washing an organic solution of a crude polycarbonate resin in an organic solvent obtained by the phosgene process, optionally including a centrifugal separation step, and containing alkali halides, caustic alkali, alkali carbonates, unreacted dioxy compounds and tertiary amines as impurities, which consists of preparing a mixture of said organic solution, which solution is produced in the polycarbonate resin-producing process, with an aqueous washing liquid, so that the aqueous phase is in an amount of 5 to 30 vol.% based on the total volume of said solution and said liquid, stirring said mixture by means of a line stirring mixer at a stirring power per unit flow rate of 0.1 kw/m$^3$/hr or more, to form a water-in-oil type emulsion, and subjecting said dispersion to centrifugal separation to separate the purified organic solution of the polycarbonate resin from the aqueous washing liquid, thereby removing impurities from said crude polycarbonate resin, wherein the method is conducted without causing a phase inversion of the water-in-oil type emulsion.

2. The method according to Claim 1, wherein the content of the polycarbonate resin in said organic solution of the crude polycarbonate resin is in the range of 6 to 25 wt %.

3. The method according to Claim 1, wherein said organic solvent is a chlorinated hydrocarbon.

4. The method according to Claim 1, said organic solvent is dichloromethane.

5. The method according to Claim 1, wherein said polycarbonate resin has a molecular height of 10,000 or more.

6. The method according to Claim 1, wherein said polycarbonate resin has a molecular weight of 13,000 to 50,000.

7. The method according to Claim 1, wherein said aqueous washing liquid is selected from pure water, an aqueous alkaline solution and an aqueous dilute acidic solution.

**Patentansprüche**

1. Verfahren zum Waschen einer organischen Lösung eines rohen Polycarbonatharzes in einem organischen Lösungsmittel, erhalten durch das wahlweise einen Zentrifugal-Trennungsschritt beinhaltende Phosgenverfahren, und enthaltend Alkalihalogenide, Ätzalkali, Alkalicarbonate, nicht umgesetzte Dioxyverbindungen und tertiäre Amine als Verunreinigungen, bestehend aus der Herstellung einer Mischung aus der organischen Lösung, welche Lösung bei dem das Polycarbonatharz herstellenden Verfahren erzeugt wird, mit einer wäßrigen Waschflüssigkeit, so daß die wäßrige Phase in einer Menge von 5 bis 30 Vol.-%, bezogen auf das Gesamtvolumen aus der Lösung und der Flüssigkeit, vorliegt, Rühren der Mischung mittels eines kontinuierlichen Flüssigkeits-Rührmischers bei einer Rührleistung pro Einheitsströmungsgeschwindigkeit von 0,1 kW/m$^3$/h oder mehr zur Bildung einer Emulsion vom Wasser-in-Öl-Typ und Unterziehen der Dispersion der Zentrifugaltrennung, um die gereinigte organische Lösung des Polycarbonatharzes aus der wäßrigen Waschflüssigkeit abzutrennen, wodurch Verunreinigungen aus dem rohen Polycarbonatharz entfernt werden, wobei das Verfahren ohne Bewirkung einer Phaseninversion der Emulsion vom Wasser-in-Öl-Typ durchgeführt wird.

2. Verfahren nach Anspruch 1, wobei der Gehalt des Polycarbonatharzes in der organischen Lösung des rohen Polycarbonatharzes im Bereich von 6 bis 25 Gew.-% liegt.

3. Verfahren nach Anspruch 1, wobei das organische Lösungmittel ein chlorierter Kohlenwasserstoff ist.

4. Verfahren nach Anspruch 1, wobei das organische Lösungsmittel Dichlormethan ist.

5. Verfahren nach Anspruch 1, wobei das Polycarbonatharz ein Molekulargewicht von 10.000 oder mehr besitzt.

6. Verfahren nach Anspruch 1, wobei das Polycarbonatharz ein Molekulargewicht von 13.000 bis 50.000 besitzt.

7. Verfahren nach Anspruch 1, wobei die wäßrige Waschflüssigkeit aus reinem Wasser, einer wäßrigen alkalischen Lösung und einer wäßrigen verdünnten sauren Lösung ausgewählt wird.

**Revendications**

1. Procédé pour laver une solution Organique d'une résine polycarbonate brute dans un solvant Organique, obtenue par le procédé au phosgène, comprenant éventuellement une étape de séparation par centrifugation, et contenant des halogénures de métal alcalin, des alcalins caustiques, des carbonates de métal alcalin, des composés dioxy n'ayant pas réagi, et des amines tertiaires en tant qu'impuretés, lequel procédé consiste à préparer un mélange de ladite solution organique, laquelle solution est produite dans le procédé de production de la résine de polycarbonate, avec un liquide de lavage aqueux, de telle sorte que la phase aqueuse représente 5 à 30% en volume du volume total de ladite solution et dudit liquide, agiter ledit mélange au moyen d'un mélangeur-agitateur en ligne à une puissance d'agitation par unité de débit de 0,1 kW/m$^3$/h ou plus, de façon à former une émulsion de type eau dans l'huile et soumettre ladite dispersion à une séparation par centrifugation pour séparer la solution organique de résine polycarbonate purifiée du liquide de lavage aqueux, ce par quoi on élimine les impuretés de ladite résine de polycarbonate brute, ledit procédé étant réalisé sans causer une inversion de phases de l'émulsion de type eau dans l'huile.

2. Procédé selon la revendication 1, dans lequel la teneur en résine polycarbonate de ladite solution organique de la résine polycarbonate brute se situe dans l'intervalle de 6 à 25% en poids.

3. Procédé selon la revendication 1, dans lequel ledit solvant organique est un hydrocarbure chloré.

4. Procédé selon la revendication 1, dans lequel ledit solvant organique est le dichlorométhane.

5. Procédé selon la revendication 1, dans lequel ladite résine polycarbonate a un poids moléculaire de 10 000 ou plus.

6. Procédé selon la revendication 1, dans lequel ladite résine polycarbonate a un poids moléculaire de 13 000 à 50 000.

7. Procédé selon la revendication 1, dans lequel ledit liquide aqueux de lavage est choisi parmi l'eau pure, une solution alcaline aqueuse et une solution acide aqueuse diluée.